# EUROPEAN PATENT SPECIFICATION

(11) **EP 2 695 521 B1**
(45) Date of publication and mention of the grant of the patent: **06.01.2016**
(21) Application number: 12179746.8
(22) Date of filing: 08.08.2012
(51) Int. Cl.: A22C 11/02

(54) **Method for producing sausage-shaped products and supply device**
Verfahren zur Herstellung von wurstförmigen Produkten und Zuführungsvorrichtung
Procédé de production de produits en forme de saucisses et dispositif d'alimentation

(43) Date of publication of application: 12.02.2014
(73) Proprietor: Poly-clip System GmbH & Co. KG, 65795 Hattersheim (DE)
(72) Inventor: Hanten, Jürgen, 61231 Bad Nauheim (DE)
(74) Representative: Eisenführ Speiser

(56) References cited:
- EP-A1- 2 532 245
- WO-A2-2005/110097
- US-B1- 6 843 713

## Description

The present invention relates to a method for producing sausage-shaped products according to independent claim 1 as well as a filling tube assembly for providing tubular or bag-shaped packaging casing to a clipping machine for producing sausage-shaped products according to the preamble of independent claim 7.

In particular, the present invention relates to a method for producing sausage-shaped products, like sausages, on a clipping machine, by feeding a flowable filling material through a filling outlet of a filling tube in a feeding direction into a tubular or bag-shaped packaging casing being closed on one end side facing in the feeding direction. The filling tube comprises an allocation area in the range of the filling outlet and a supply area arranged upstream the allocation area, with respect to the feeding direction.

Moreover, the present invention relates to a filling tube assembly for a clipping machine for producing sausage-shaped products, like sausages. The filling tube assembly comprises a filling tube with a filling outlet, for feeding a flowable filling material in a feeding direction into a tubular or bag-shaped packaging casing. The tubular or bag-shaped packaging casing is being closed on one end side facing in the feeding direction. A supply area is provided on the filling tube for providing the tubular or bag-shaped packaging casing to the clipping machine. The clipping machine comprises a control device for controlling the clipping machine. The control device is provided with given values, such as volume and / or weight of filling material to be filled into the tubular or bag-shaped packaging casing, length of tubular or bag-shaped packaging casing corresponding to the length of the sausage-shaped product to be produced. Furthermore, the control device is gathering information about respective actual values, compares the actual values with the given values and controls the clipping machine to match the given values.

In the practice, it is known that, e.g. in the production of sausage-shaped products, like sausages, a filling material is fed by a filling machine through a filling tube of a clipping machine into a tubular or bag-shaped packaging casing, which is stored on the filling tube and which is closed at its front end, referred to the feeding direction, by a closing clip. The tubular or bag-shaped packaging casing is pulled off from the filling tube while being filled, typically due to a force generated by the filling process.

After a predetermined volume of filling material is filled into said tubular or bag-shaped packaging casing, a displacement device with at least a first and a second pair of displacement elements forms a plait-like portion of the tubular casing material, and the clipping machine places and closes at least one closing clip at the plait-like portion, forming the back end of the sausage-shaped product just produced and the front end of the next sausage-shaped product to be produced, by respective closing tools which are reversibly movable towards the plait-like portion. After that, the sausage-shaped product just produced, is separated from the remaining tubular or bag-shaped packaging casing by a knife or the like of a cutting device of the clipping machine and is transferred to a storage device or another machine for further treatment.

Moreover, it is known to produce sausage-shaped products, in particular sausages, having printings and printing marks printed to the tubular or bag-shaped packaging casing, whereas the printing marks can be provided for initiating and timing the filling and closing procedure. Furthermore, the printing marks can be used for controlling the position of the product printing on the finished product. From EP patent application 2 532 245, a clipping machine for producing sausages, by filing a flowable filling material into a tubular packaging casing and closing said packaging casing by closing clips, is known. This known clipping machine includes a filling tube on which an unfolding device of non-circular cross-section shape is arranged, for unfolding the tubular packaging casing while polled-off from said filling tube during the filling process, in order to improve the detection of markers on the tubular packaging casing.

PCT patent application WO 2005/110097 discloses an arrangement for producing sausages having a tubular casing, which includes a filling tube on which an unfolding device is arranged, for unfolding the tubular casing before passing a sensor device which detects markers on the casing material. The known arrangement further comprises a brake which can be moved into a stop position for stopping the pull-off movement of the tubular casing during the closing process. For detecting the printing marks a scanning device is provided next to the filling tube. In production and during the filling procedure, the casing material is forwarded on the filling tube. As a result a printing mark is pulled in a scanning area of the scanning device. The scanning device detects the printing mark and sends a respective signal to a control device. The control device then initiates the displacement device to form a plait-like portion of the tubular or bag-shaped packaging casing and the clipping device to place at least one closing clip at the plait-like portion. After that, the filling procedure will start over until the end of production. A problem with this configuration can occur in some cases, e.g. when the consistency of the filling material and / or the elasticity of the tubular or bag-shaped packaging casing differ from expected properties, especially due to unforeseen reasons. This can result in sausage-shaped products of same length comprising different amounts of filling material or sausage-shaped products comprising the same amount of filling material but having a different length than desired. The latter will cause the clip not to be placed at the correct position with regard to the printing mark, and since the printing mark is also provided for aligning the other product printing with the product, the product printing will not be aligned with a sausage-shaped product any more.

Therefore, it is an object of the present invention to provide a method for producing sausage-shaped products and a filling tube assembly for providing tubular or bag-shaped packaging casing to a clipping machine for producing sausage-shaped products, with which the above mentioned problems can be overcome, in particular with which the sausage-shaped products produced will be of same weight and length. Furthermore, it is another object of the present invention to provide a method and a filling tube assembly for providing tubular or bag-shaped packaging casing with product printings, e.g. pictures or trademarks to a clipping machine, wherein the product printings on the tubular or bag-shaped packaging casing will be provided at a desired position of the sausage-shaped product.

The aforesaid object with regard to a method for producing sausage-shaped products, like sausages, is achieved by the features of independent claim 1. Advantageous features regarding the method are described in claims 2 to 6. The aforesaid object with regard to providing tubular or bag-shaped packaging casing with printing marks to a clipping machine is achieved by the features of independent claim 7. Advantageous configurations of the supply device are described in claims 8 to 15.

According to the present invention, there is provided a method for producing sausage-shaped products, like sausages, on a clipping machine, by feeding a flowable filling material through a filling outlet of a filling tube in a feeding direction into a tubular or bag-shaped packaging casing being closed on one end side facing in the feeding direction. The filling tube comprises an allocation area in the range of the filling outlet and a supply area arranged upstream the allocation area, with respect to the feeding direction.

The method comprises the step of providing tubular or bag-shaped packaging casing on the supply area of the filling tube, providing a section of the tubular or bag-shaped packaging casing, corresponding to the length of the sausage-shaped product to be produced plus at least the length of the allocation area, on the allocation area of the filling tube. Preferably, the tubular or bag-shaped packaging casing is forwarded by a forwarding device.

In another step according to the invention, the one end side closed tubular or bag-shaped packaging casing is filled with a predetermined portion of filling material and thereby tubular or bag-shaped packaging casing to be filled is pulled off from the allocation area, only. The system is preferably configured that by the filling process a length of tubular or bag-shaped packaging casing is pulled off the allocation area, corresponding to the length of the sausage-shaped product to be produced, and not from the supply area.

In another step according to the invention the just filled section of the tubular or bag-shaped packaging casing is gathered and closed. Preferably, gathering of the just filled section is performed by a displacement device, forming a plait-like portion to the filled tubular or bag-shaped packaging casing. It is preferred that the tubular or bag-shaped packaging casing is closed by at least one closure device, like a closure clip, on the end side facing opposite to the feeding direction. In an alternative configuration the tubular or bag-shaped packaging casing can be closed by two closure devices, e.g. two closure clips. In another alternative the tubular or bag-shaped packaging casing comprises at least one welding crosswise to the feeding direction and thereby forming a bag-shaped segment of the tubular or bag-shaped packaging casing. An open end of said bag-shaped segment can be closed by at least one closure clip after the filling and forming process.

In another step according to the invention a predetermined length of tubular or bag-shaped packaging casing, corresponding to the length of the sausage-shaped product to be produced, is forwarded in feeding direction from the supply area into the allocation area of the filling tube by a forwarding device. Thereby tubular or bag-shaped packaging casing of a predefined length for producing the next sausage-shaped product is provided to the allocation area.

Preferably, in another step a printing mark, being provided on the tubular or bag-shaped packaging casing, is scanned for identifying the length of tubular or bag-shaped packaging casing to be forwarded into the allocation area.

Advantageously, the length of tubular or bag-shaped packaging casing to be forwarded into the allocation area is determined by the forwarding device. Hence, the actual length of tubular or bag-shaped packaging casing provided can be determined at any time and the filling, forwarding, forming, closing and cutting processes can be controlled accordingly. Consequently, a scanning device is not necessary for carrying out the invention. However, scanning of the printing marks can ascertain the moment when tubular or bag-shaped packaging casing of a determined length has been forwarded to the allocation area. Therefore, it could be a purpose of scanning of the printing marks for checking the accuracy of forwarding the tubular or bag-shaped packaging casing of the forwarding device and hence providing data for performing corrections to the forwarding process if necessary. As a result, according to the invention, the length of tubular or bag-shaped packaging casing to be forwarded into the allocation area can be determined by the scanning device and / or the forwarding device.

According to the invention, in another step a section of the tubular or bag-shaped packaging casing is reversibly fixed relatively to the filling tube by a braking device. The braking device is disposed between the allocation area and the supply area of the filling tube.

In a preferred aspect of the invention, the finished sausage-shaped product is cut off the clipping machine right after closing the filled tubular or bag-shaped packaging casing. By this means single sausage-shaped products can be produced, in alternative configurations the cut is not made after each product, thus manufacturing a string of sausage-shaped products comprising two, three, or more sausage-shaped pro-ducts.

According to a further aspect of the present invention, the filling process is initiated before forwarding of the tubular or bag-shaped packaging casing to the allocation area is stopped. In manufacturing processes the output of a manufacturing machine is a key figure for productivity and production costs. Therefore, it is a main target for many production systems to increase the production speed in order to increase its productivity and lower production costs accordingly. Consequently, it is useful to parallelize production steps if possible rather than working off each step consecutively. Therefore, forwarding of the tubular or bag-shaped packaging casing to the allocation area and the filling of the tubular or bag-shaped packaging casing can be parallelized considering that tubular or bag-shaped packaging casing is solely provided to the allocation area by the forwarding device and not due to pulling effect due to the filling process. Preferably the filling process starts right after the forwarding process is initiated and stops right after the forwarding process is stopped and the tubular or bag-shaped packaging casing is reversibly fixed relatively to the filling tube.

It is preferred that the forwarding and reversibly fixing of the tubular or bag-shaped packaging casing is executed by an allocation device by locking the allocation device with respect to a rotation for forwarding the tubular or bag-shaped packaging casing. To enhance the fixation effect, the allocation device can be pressed against the tubular or bag-shaped packaging casing at a higher pressure level than during the forwarding process.

It is within the scope of the present invention, that a series of steps of the inventive method can be performed repeatedly to produce a plurality of sausage-shaped products. Thereby it has to be considered that for producing one sausage-shaped product of a production lot, basically a forwarding, a fixing, a filling, a releasing, a forming and at least one closing process have to be performed. If useful, some production steps for successive sausage-shaped products can be parallelized, e.g. as described in the previous sections.

Moreover, according to the present invention, there is provided a filling tube assembly for a clipping machine for producing sausage-shaped products, like sausages. According to the invention, the filling tube assembly comprises a filling tube with a filling outlet, for feeding a flowable filling material in a feeding direction into a tubular or bag-shaped packaging casing. The tubular or bag-shaped packaging casing is closed on one end facing in the feeding direction. Furthermore, a supply area is provided on the filling tube for providing the tubular or bag-shaped packaging casing to the clipping machine. The clipping machine comprises a control device for carrying out the inventive method as defined above.

The filling tube assembly comprises a supply device with at least one drivable forwarding device for forwarding a section of the tubular or bag-shaped packaging casing to an allocation area. The allocation area is provided on the filling tube between the forwarding device and the filling outlet. The supply device further comprises at least one braking device for reversibly fixing a section of the tubular or bag-shaped packaging casing relatively to the filling tube. It is preferred that the braking device is configured that during the fixing of the tubular or bag-shaped packaging casing the tubular or bag-shaped packaging casing is not pressed against the filling tube. Preferably, the supply device is arranged that the tubular or bag-shaped packaging casing adjacent the forwarding device can be provided and forwarded while surrounding the filling tube and not contacting it.

Advantageously, a scanning device is arranged at the filling tube for scanning printing marks being provided on the tubular or bag-shaped packaging casing in a scanning position for identifying the length of tubular or bag-shaped packaging casing to be forwarded into the allocation area. The printing marks may be allocated in any arbitrary pattern at the tubular or bag-shaped packaging casing, preferably the distance between two succeeding printing marks corresponds to the length of the sausage-shaped product to be produced. Therefore, it is preferred that the distance between the printing marks is constant for a production lot.

In a preferred embodiment of the invention, the forwarding device and the braking device are integrated in an allocation device for forwarding and fixing the tubular or bag-shaped packaging casing. The allocation device is preferably arranged upstream the allocation area, referred to the feeding direction. Preferably, the allocation device is arranged downstream the scanning device. In other embodiments, the allocation device can be provided upstream the scanning device or at the same longitudinal position as the scanning device, referred to the feeding direction. It is preferred that the allocation device is located less than half of the product-length apart from the scanning device with regard to the feeding direction. By this means the complexity and amount of parts of the supply device can be reduced. Furthermore, the amount of contact areas with the tubular or bag-shaped packaging casing can be reduced, hence reducing the risk of damaging the tubular or bag-shaped packaging casing during the production process. In configurations with a separate forwarding device and braking device, the braking device is preferably provided downstream the forwarding device, referred to the feeding direction.

Preferably, the forwarding device comprises at least one pair of forwarding rolls, wherein the forwarding rolls are arranged along the longitudinal side of the filling tube. It is further preferred that the forwarding rolls are arranged to engage with each other by clamping a part of the tubular or bag-shaped packaging casing for forwarding the tubular or bag-shaped packaging casing to the allocation area. Advantageously, the pair of forwarding rolls is also arranged not to cause the tubular or bag-shaped packaging casing to contact the filling tube. The forwarding rolls can comprise a cylindrical cross-section. Furthermore, the forwarding rolls may have a smooth and/ or polished surface for further reducing the risk of damaging the tubular or bag-shaped packaging casing.

In a further advantageous configuration, the filling tube comprises an expanding ring at its outer surface, located upstream the forwarding device with regard to the feeding direction for flaring the tubular or bag-shaped packaging casing radially. The expanding ring extends on at least one plane more than on other planes, wherein the feeding direction is parallel to the at least one plane. Consequently, the tubular or bag-shaped packaging casing can be flared on that plane at a higher degree than on other planes. Therefore, the cross-section of the flared tubular or bag-shaped packaging casing can be approximately oval. Furthermore, the expanding ring can form two opposing flat border areas of the tubular or bag-shaped packaging casing.

According to the invention, the forwarding device is configured to engage with the tubular or bag-shaped packaging casing on at least one of the flat border areas for forwarding the tubular or bag-shaped packaging casing to the allocation area. By engaging with the flat border areas of the tubular or bag-shaped packaging casing, the forwarding device is less likely to cause the tubular or bag-shaped packaging casing to contact the filling tube. Thereby the risk of damaging the tubular or bag-shaped packaging casing during production is effectively reduced. Preferably, the pair of forwarding rolls is arranged movably and reversibly towards each other from two opposite sides of the tubular or bag-shaped packaging casing to engage with the tubular or bag-shaped packaging casing for carrying out a forwarding movement and a braking force on the tubular or bag-shaped packaging casing.

Furthermore, it is advantageous and within the scope of the present invention that at least two forwarding rolls comprise a waisted middle sector and on both sides of the waisted middle sector a cylindrical outer sector. The dimension of the waistes middle sector is designed to be bigger than the outer diameter of the tubular or bag-shaped packaging casing on the filling tube. By these means, each forwarding roll can engage with each of its two cylindrical outer sectors with a flat border area of the tubular or bag-shaped packaging casing and thereby avoiding to press the tubular or bag-shaped packaging casing radially against the filling tube, referred to the filling tube.

In an advantageous configuration, the forwarding device is configured to determine the actual length of the tubular or bag-shaped packaging casing forwarded. As already pointed out, this feature allows determining the actual length of tubular or bag-shaped packaging casing provided to the allocation area at any time during the forwarding process, without the need of a scanning device. Preferably, the scanning device is configured to scan at predetermined intervals only, wherein the predetermined intervals can be selected in a way not to scan each printing mark.

It is further within the scope of the present invention that the filling tube assembly is configured to be used executing the method as discussed above.

In the following first example a sequence of a preferred practice of the method according to the invention is described. In this example the distance between two successive printing marks equals the length of tubular or bag-shaped packaging casing corresponding to the length of the sausage-shaped product to be produced. The length of the allocation area corresponds to n-times the length of the sausage-shaped product to be produced. The scanning device is located adjacent a sector of the allocation device facing away the filling outlet, with respect to the feeding direction.
- Step 1:: Starting forwarding of tubular or bag-shaped packaging casing into the allocation area by the allocation device.
- Step 2:: Forming a plait-like portion to an area of the tubular or bag-shaped packaging casing adjacent to the filling outlet, wherein a printing mark is preferably positioned in the middle of the plait-like portion.
- Step 3:: Placing at least one closure clip in the middle of the plait-like portion.
- Step 4:: Starting the filling process.
- Step 5:: Detecting a printing mark by the scanning device.
- Step 6:: Sending a signal of the detection to the control device.
- Step 7:: The control device initiates the stopping of the forwarding process.
- Step 8:: Fixing the tubular or bag-shaped packaging casing relatively to the filling tube by the allocation device.
- Step 9:: Determining the amount of filling material being provided into the tubular or bag-shaped packaging casing.
- Step 10:: Stopping the filling process, when the determined amount of filling material, being provided into the tubular or bag-shaped packaging casing, reaches a given value.
- Step 11:: Releasing the fixation of the tubular or bag-shaped packaging casing relatively to the filling tube.

After step 11 the production sequence can be restarted with step 1 for continuing production. For clarity reasons the sequence is demonstrated starting with the forwarding process of the tubular or bag-shaped packaging casing. The actual production of one unit of the sausage-shaped product would start with step 3 and end with step 3 of the next production loop, hence step 3 is the finishing process of the actual and the starting process of the following product. In case there are two clips placed next to each other at a plait-like portion, the gap between the two clips should be located in the middle of the printing mark. In that case step 3 can be divided into step 3a for placing the first clip and step 3c for placing the second clip. However, step 3a and step 3c can be performed simultaneously. Further, an additional cutting process could be performed after at least one clip has been placed. In the cutting process a cutting device cuts the just finished product off the clipping machine. Consequently, in a succeeding step the cut-off product will be guided into a container or forwarded to location.

A second example of the method according to the invention has the same frame conditions as the first example and comprises the following steps:
- Step 1:: Starting forwarding of tubular or bag-shaped packaging casing to the allocation area by the allocation device.
- Step 2:: Forming a plait-like portion to an area of the tubular or bag-shaped packaging casing adjacent to the filling outlet, wherein a printing mark is preferably positioned in the middle of the plait-like portion.
- Step 3:: Placing at least one closure clip in the middle of the plait-like portion.
- Step 4:: Detecting a printing mark by the scanning device.
- Step 5:: Sending a signal of the detection to the control device.
- Step 6:: The control device initiates the stopping of the forwarding process.
- Step 7:: Fixing the tubular or bag-shaped packaging casing relatively to the filling tube by the allocation device.
- Step 8:: Starting the filling process.
- Step 9:: Determining the amount of filling material being provided into the tubular or bag-shaped packaging casing.
- Step 10:: Stopping the filling process, when the determined amount of filling material, being provided into the tubular or bag-shaped packaging casing, reaches a given value.
- Step 11:: Releasing the fixation of the tubular or bag-shaped packaging casing relatively to the filling tube.

The sequence according the second example may be applicable for production of sensitive products which must not be destroyed during production e.g. for safety reasons or because of possible contamination or damages of the clipping machine.

The above mentioned modifications of the first example of the method according to the invention are also applicable to the second example of the method according to the invention, respectively.

It is advantageous, when the printing marks are positioned in a way that the closure means will be placed onto or near the printing marks. In alternative configurations the printing marks can be positioned with an offset, referring to the feeding direction. In that case, the offset of the printing marks has to be considered by the control unit, in order to start and stop the production processes accordingly. Alternatively, the scanning device could be arranged with respect to the offset of the printing marks.

In the following, further advantages and features of the inventive method for producing sausage-shaped products as well as the supply device for providing tubular or bag-shaped packaging casing with printing marks to a clipping machine are described in conjunction with the attached drawings. Thereby, the expressions "left", "right", "below" and "above" are referred to the drawings in an orientation of the drawings which allows a normal reading of the reference numbers.

In the drawings:
Fig. 1: is an exploded view to an embodiment of a filling tube assembly according to the present invention for a clipping machine for producing sausage-shaped products, comprising a supply device according to the present invention;
Fig. 2: is a perspective schematic view to the embodiment of the filling tube assembly according to Fig. 1, showing the clipping machine at the beginning of the forwarding process; and
Fig. 3: is the perspective view of Fig. 2, wherein the filling process is initiated and the tubular or bag-shaped packaging casing is fixed by the allocation device.

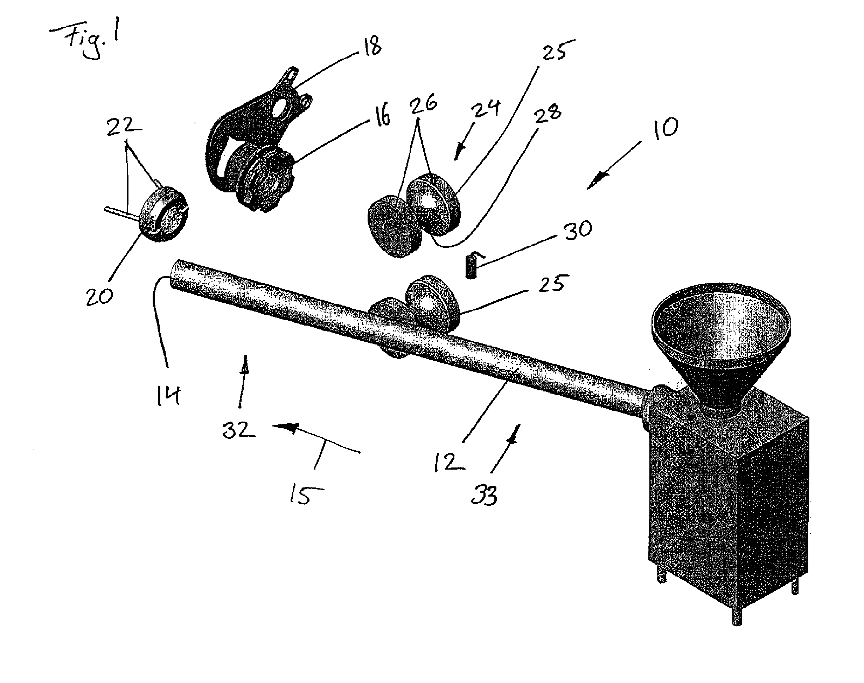

Referring to Fig. 1,the filling tube assembly according to the present invention comprises a filling tube 12 having a filling outlet 14. Moreover, a casing brake 16 and a displacement device 18 are arranged immediately downstream filling outlet 14 of filling tube 12, in feeding direction 15. Not displayed flowable filling material can be pressed through filling tube 12 in feeding direction 15 towards filling outlet 14 for exiting filling tube 12 at filling outlet 14. Expanding ring 20 comprises two expanding arms 22 arranged on a face side of expanding ring 20 facing in feeding direction 15, wherein expanding arms 22 are diverting from each other and filling tube 12 with respect to feeding direction 15. Instead of expanding arms 22, expanding ring 20 could have any shape for causing the same or a similar effect. Each of forwarding rolls 24 comprises two cylindrical outer sectors 26 and a waist-shaped middle sector 28. Furthermore a scanning device 30 is provided, e.g. a laser- or IR-scanner.

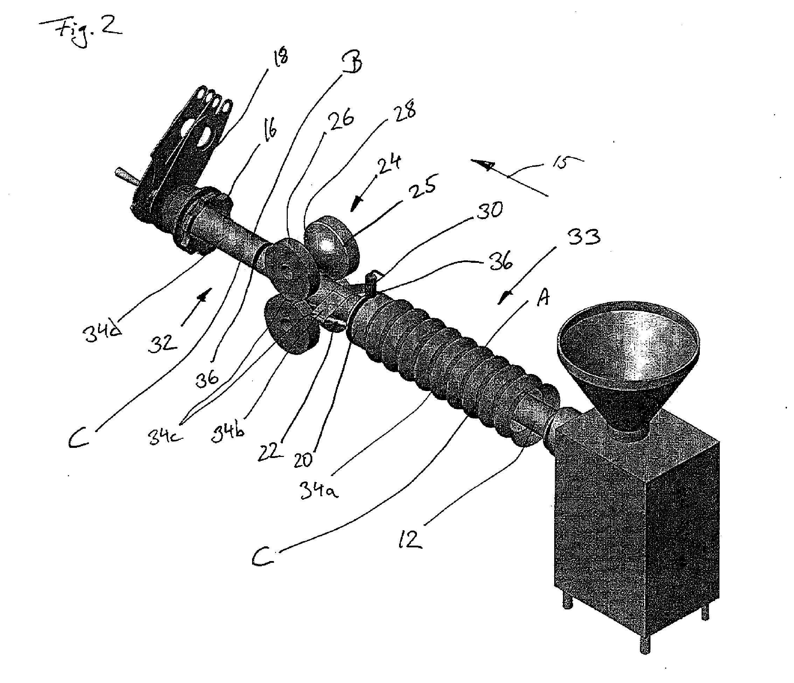

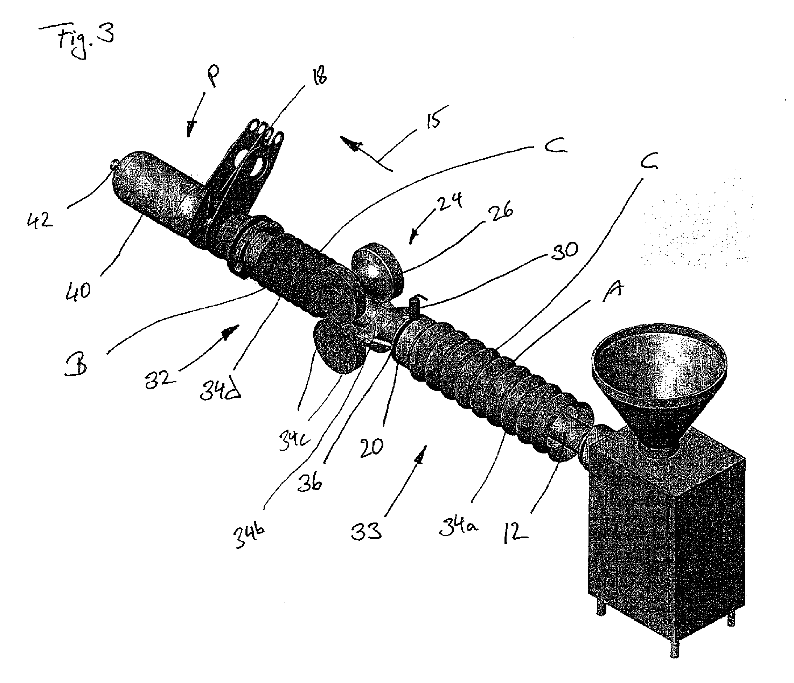

The arrangement and interaction of the aforementioned components according to the present invention is illustrated in Fig. 2 and Fig. 3. In Fig. 2 tubular or bag-shaped packaging casing C is provided to filling tube 12. Pre-scanned packaging casing 24a is arranged upstream scanning device 30 with regard to feeding direction 15 and preferably arranged caterpillar-like for being retrievable without causing too much stress to the tubular or bag-shaped packaging casing C.

On the expanding ring 20 the tubular or bag-shaped packaging casing C is expanded, especially by expanding arms 22, as a result expanded packaging casing 34b is provided at the ends of expanding arms 22 facing away from expanding ring 20. Furthermore, expanded packaging casing 34b comprises flat border areas 34c formed by expanding arms 22. Alternatively and not shown in the drawings the expanding ring 20 could not comprise expanding arms 22 at all.

A set of forwarding rolls 24 is arranged on opposing long sides of filling tube 12 and engaging each other with a part of the flat border area 34c of expanded packaging casing 34b pinched in between cylindrical outer sectors 26 of forwarding rolls 24. Preferably middle sector 28 is not in contact with the tubular or bag-shaped packaging casing C. By rotating forwarding rolls 24 the tubular or bag-shaped packaging casing C can be forwarded to allocation area 34 in which allocated packaging casing 34b with printing mark 36 has already been arranged. Another printing mark 36 is located in a scanning area of scanning device 30. Fig. 2 shows a configuration in which the forwarding process of tubular or bag-shaped packaging casing C to allocation area 32 has just been initiated.

Referring to Fig. 3, the pair of forwarding rolls 24 already forwarded allocated packaging casing 34d to allocation area 32. Printing mark 36 is located in the scanning area of scanning device 30. Consequently, Fig. 3 shows a state according to the inventive method in which flat border area 34c of expanding packaging casing 34b is fixed by forwarding rolls 24 relatively to filling tube 12 with respect to feeding direction 15. Furthermore the filling process has already been started, illustrated by partly filled casing 40 with plait-like portion 42 at an end facing away from filling tube 12. Plait-like portion 42 is provided with a closing clip, which cannot be seen from this perspective. Allocated packaging casing 34d is provided caterpillar-like in the allocation area during filling process and will be smoothed at end of filling process. Since forwarding rolls 24 fix the tubular or bag-shaped packaging casing C with respect to feeding direction 15, during filling process printing marks 36 will remain in scanning position at scanning device 30. Consequently, during filling process only as much of allocated packaging casing 34 can be pulled off allocation area 32 of filling tube 12 until allocated packaging casing 34d is arranged smoothly on allocation area. Since the amount of tubular or bag-shaped packaging casing C provided to allocation area 32 is controlled by printing marks 36 and scanning device 30, the sausage-shaped products P produced by the method and with the use of the supply device according to the invention, will be of constant weight as well as constant length

## Claims

1. A method for producing sausage-shaped products (P), like sausages, on a clipping machine, by feeding a flowable filling material through a filling outlet (14) of a filling tube (12) in a feeding direction (15) into a tubular or bag-shaped packaging casing (C) being closed on one end side facing in said feeding direction (15), wherein said filling tube (12) comprises an allocation area (32) in the range of said filling outlet (14) and a supply area (33) arranged upstream said allocation area (32), with respect to said feeding direction (15), the method comprising the steps of:
- providing a supply (A) of tubular or bag-shaped packaging casing (C) on said supply area (33) of said filling tube (12);
- providing a section (B) of said tubular or bag-shaped packaging casing (C), corresponding to the length of said sausage-shaped product (P) to be produced plus at least the length of said allocation area (32), on said allocation area (32);
- filling a predetermined portion of filling material into said tubular or bag-shaped packaging casing (C), thereby pulling said tubular or bag-shaped packaging casing (C) to be filled from said allocation area (32) only;
- gathering and closing the just filled section of said tubular or bag-shaped packaging casing (C); and
- forwarding a predetermined length of said tubular or bag-shaped packaging casing (C), corresponding to the length of said sausage-shaped product (P) to be produced, in feeding direction (15) from said supply area (33) into said allocation area (32) of said filling tube (12).

2. The method according to claim 1,
**characterized in that**
the method comprises the step of:
- scanning at least one printing mark (36) on said tubular or bag-shaped packaging casing (C) for identifying the length of tubular or bag-shaped packaging casing (C) to be forwarded into said allocation area (32).

3. The method according to claim 1 or 2,
**characterized in that**
the method comprises the step of:
- determining the length of packaging casing (C) to be forwarded into said allocation area (32) by a forwarding device (23a).

4. The method according to any of the previous claims,
**characterized in that**
the method comprises the step of:
- reversibly fixing a section of said tubular or bag-shaped packaging casing (C) relatively to said filling tube (12) by a braking device (23b) between the allocation area (32) and the supply area (33) of the filling tube (12).

5. The method according to any of the previous claims,
**characterized in that**
filling of said filling material into said tubular or bag-shaped packaging casing (C) is initiated before forwarding of said tubular or bag-shaped packaging casing (C) into allocation area (32) is stopped.

6. The method according to any of the previous claims,
**characterized in that**
said forwarding of said tubular or bag-shaped packaging casing (C) for a successive sausage-shaped product (P) is started after said filling process is finished and before gathering and closing said just filled section of said tubular or bag-shaped packaging casing (C).

7. A filling tube assembly for a clipping machine for producing sausage-shaped products (P), like sausages, wherein the filling tube assembly comprising a filling tube (12) with a filling outlet (14), for feeding a flowable filling material in a feeding direction (15) into a tubular or bag-shaped packaging casing (C) being closed on one side end facing in said feeding direction (15), a supply area (33) provided on said filling tube (12) for providing said tubular or bag-shaped packaging casing (C) to said clipping machine,
**characterized in that** said clipping machine comprises a control device for carrying out the method according to at least one of claims 1 to 6,
wherein said filling tube assembly (10) comprises a supply device (10) with at least one drivable forwarding device (23a) for forwarding a section of said tubular or bag-shaped packaging casing (C) to an allocation area (32) provided on said filling tube (12) between said forwarding device (23a) and said filling outlet (14), and at least one braking device (23b) for reversibly fixing a section of said tubular or bag-shaped packaging casing (C) relatively to said filling tube (12).

8. Filling tube assembly according to claim 7,
**characterized in that**
a scanning device (30) is arranged at said filling tube (12) for scanning printing marks (36) being provided on the tubular or bag-shaped packaging casing (C) in a scanning position for identifying the length of tubular or bag-shaped packaging casing (C) to be forwarded into said allocation area (32).

9. Filling tube assembly according to claim 7 or 8,
**characterized in that**
said forwarding device (23a) and said braking device (23b) are combined in an allocation device (24) for forwarding and fixing said tubular or bag-shaped packaging casing (C), referred to said feeding direction (15).

10. Filling tube assembly according to any of claims 7 to 9,
**characterized in that**
said forwarding device (23a) comprises at least one pair of forwarding rolls (24), wherein said forwarding rolls (24) are arranged along the longitudinal side of said filling tube (12).

11. Filling tube assembly according to claim 10,
**characterized in that**
said filling tube (12) comprises an expanding ring (20) at its outer surface, located upstream said forwarding device (23a) with regard to said feeding direction (15) for flaring said tubular or bag-shaped packaging casing (C) radially, wherein said expanding ring (20) extends on at least one plane parallel to the feeding direction (15) more than on other planes for flaring said tubular or bag-shaped packaging casing (C) in at least two opposite directions at a higher degree than in the other directions, thus forming two opposing flat border areas (34c) of said tubular or bag-shaped packaging casing (C), wherein said forwarding device (23a) is configured to engage with said tubular or bag-shaped packaging casing (C) on at least one of said flat border areas (34c) for forwarding said tubular or bag-shaped packaging casing (C) into said allocation area (32).

12. Filling tube assembly according according to claim 10 or 11,
**characterized in that**
said pair of forwarding rolls (24) is arranged movably and reverseably towards each other from two opposite sides of said tubular or bag-shaped packaging casing (C) to engage with said tubular or bag-shaped packaging casing (C) for carrying out a forwarding movement and a braking force on said tubular or bag-shaped packaging casing (C).

13. Filling tube assembly according according to any of claims 10 to 12,
**characterized in that**
at least two forwarding rolls (24) comprise a waisted middle sector (28) and on both sides of said waisted middle sector (28) a cylindrical outer sector (26), wherein the dimension and shape of said waisted middle sector (28) is designed to encircle said tubular or bag-shaped packaging casing (C) on said filling tube (12).

14. Filling tube assembly according according to any of claims 7 to 13,
**characterized in that**
said forwarding device (23a) is configured to determine the actual length of said tubular or bag-shaped packaging casing (C) forwarded.

15. Filling tube assembly according according to any of claims 7 to 14,
**characterized in that**
said supply device (10) is configured to be used for executing a method according to any of claims 1 to 6.

## Patentansprüche

1. Verfahren zum Herstellen von wurstförmigen Produkten (P), wie Würsten, auf einer Clipmaschine durch Zuführen eines fließfähigen Füllmaterials durch einen Füllauslass (14) eines Füllrohres (12) in einer Zuführrichtung (15) in eine rohr- oder beutelförmige Verpackungshülle (C), welche an einer in Zuführrichtung (15) weisenden Endseite verschlossen ist, wobei das Füllrohr (12) ein Bereitstellungsareal (32) im Bereich des Füllauslasses (14) und ein Vorratsareal (33), das, bezogen auf die Zuführrichtung (15), stromaufwärts des Bereitstellungsareals (32) aufweist, wobei das Verfahren die Schritte enthält:
- Bereitstellen eines Vorrates (A) einer rohr- oder beutelförmigen Verpackungshülle (C) in dem Vorratsareal (33) des Füllrohrs (12);
- in dem Bereitstellungsareal (32), Bereitstellen eines Abschnitts (B) der rohr- oder beutelförmigen Verpackungshülle (C), welcher der Länge des herzustellenden, wurstförmigen Produkts (P) plus zumindest der Länge des Bereitstellungsareals (32) entspricht;
- Füllen eines vorbestimmten Abschnitts des Füllmaterials in die rohr- oder beutelförmige Verpackungshülle (C), wodurch die zu füllende rohr- oder beutelförmige Verpackungshülle (C) nur von dem Bereitstellungsareal (32) abgezogen wird;
- Zusammenraffen und Verschließen des gerade gefüllten Abschnitts der rohr- oder beutelförmigen Verpackungshülle (C); und
- Fördern einer vorbestimmten Länge der rohr- oder beutelförmigen Verpackungshülle (C), die der Länge des herzustellenden, wurstförmigen Produkts (P) entspricht, in Zuführrichtung (15) von dem Vorratsareal (33) in den Bereitstellungsareal (32) des Füllrohrs (12).

2. Verfahren nach Anspruch 1,
**dadurch gekennzeichnet, dass** das Verfahren die Schritte enthält:
- Abtasten zumindest einer Druckmarke (36) auf der rohr- oder beutelförmigen Verpackungshülle (C) zum Identifizieren der Länge der zu dem Bereitstellungsareal (32) zu fördernden rohr- oder beutelförmigen Verpackungshülle (C).

3. Verfahren nach Anspruch 1 oder 2,
**dadurch gekennzeichnet, dass** das Verfahren den Schritt enthält:
- Bestimmen der Länge der in dem Bereitstellungsareal (32) durch eine Fördereinrichtung (23a) zu fördernden Verpackungshülle (C).

4. Verfahren nach einem der vorstehenden Ansprüche,
**dadurch gekennzeichnet, dass** das Verfahren den Schritt enthält:
- reversibles Fixieren eines Abschnitts der rohr- oder beutelförmigen Verpackungshülle (C) relativ zu dem Füllrohr (12) durch eine Bremseinrichtung (23b) zwischen dem Bereitstellungsareal (32) und dem Vorratsareal (33) des Füllrohrs (12).

5. Verfahren nach einem der vorstehenden Ansprüche,
**dadurch gekennzeichnet, dass** das Füllen des Füllmaterials in die rohr- oder beutelförmige Verpackungshülle (C) begonnen wird, bevor das Fördern der rohr- oder beutelförmigen Verpackungshülle (C) in dem Bereitstellungsareal (32) gestoppt wird.

6. Verfahren nach einem der vorstehenden Ansprüche,
**dadurch gekennzeichnet, dass** das Fördern der rohr- oder beutelförmigen Verpackungshülle (C) für ein nachfolgendes wurstförmiges Produkt (P) begonnen wird, nachdem der Füllprozess beendet ist und vor dem Zusammenraffen sowie Verschließen des gerade gefüllten Abschnitts der rohr- oder beutelförmigen Verpackungshülle (C).

7. Füllrohranordnung für eine Clipmaschine zum Herstellen wurstförmiger Produkte (P), wie Würste, wobei die Füllrohranordnung ein Füllrohr (12) mit einem Füllauslass (14) zum Zuführen eines fließfähigen Füllmaterials in eine Zuführrichtung (15) in eine rohr- oder beutelförmige Verpackungshülle (C), die an einem in Richtung der Zuführrichtung (15) weisenden Ende verschlossen ist, ein Vorratsareal (33), das auf dem Füllrohr (12) zum Bereitstellen der rohr- oder beutelförmigen Verpackungshülle (C) zu der Clipmaschine vorgesehen ist,
**dadurch gekennzeichnet, dass** die Clipmaschine eine Steuereinrichtung zum Ausführen des Verfahrens nach zumindest einem der Ansprüche 1 bis 6 aufweist,
wobei die Füllrohranordnung (10) eine Vorratseinrichtung (10) mit zumindest einer antreibbaren Fördereinrichtung (23a) zum Fördern eines Abschnitts der rohr- oder beutelförmigen Verpackungshülle (C) in ein Bereitstellungsareal (32), das auf dem Füllrohr (12) zwischen der Fördereinrichtung (23a) und dem Füllauslass (14) vorgesehen ist, und zumindest eine Bremseinrichtung (23b) zum reversiblen Fixieren eines Abschnitts der rohr- oder beutelförmigen Verpackungshülle (C) relativ gegenüber dem Füllrohr (12) aufweist.

8. Füllrohranordnung nach Anspruch 7,
**dadurch gekennzeichnet, dass** eine Abtasteinrichtung (30) an dem Füllrohr (12) zum Abtasten von Druckmarken (36), die auf der rohr- oder beutelförmigen Verpackungshülle (C) vorgesehen sind, in einer Abtastposition zum Identifizieren der Länge der in den Bereitstellungsareal (32) zu fördernden rohr- oder beutelförmigen Verpackungshülle (C) angeordnet ist.

9. Füllrohranordnung nach Anspruch 7 oder 8,
**dadurch gekennzeichnet, dass** die Fördereinrichtung (23a) und die Bremseinrichtung (23b) in einer Bereitstellungseinrichtung (24) zum Fördern und Fixieren der rohr- oder beutelförmigen Verpackungshülle (C), bezogen auf die Zuführrichtung (15), kombiniert sind.

10. Füllrohranordnung nach einem der Ansprüche 7 bis 9,
**dadurch gekennzeichnet, dass** die Fördereinrichtung (23a) zumindest ein Paar an Förderrollen (24) aufweist, wobei die Förderrollen (24) entlang der Längsseite des Füllrohrs (12) angeordnet sind.

11. Füllrohranordnung nach Anspruch 10,
**dadurch gekennzeichnet, dass** das Füllrohr (12) an seiner Außenoberfläche einen Aufweitring (20) aufweist, der, bezogen auf die Zuführrichtung (15), stromaufwärts der Fördereinrichtung (23a) zum radialen Aufweiten der rohr- oder beutelförmigen Verpackungshülle (C) angeordnet ist, wobei sich der Aufweitring (20) in zumindest einer Ebene parallel zu der Zuführrichtung (15) weiter erstreckt als in anderen Ebenen zum Aufweiten der rohr- oder beutelförmigen Verpackungshülle (C) in zumindest zwei entgegengesetzten Richtungen mit einem höheren Grad als in die anderen Richtungen, wodurch zwei einander gegenüberliegende, flache Grenzbereiche (34c) der rohr- oder beutelförmigen Verpackungshülle (C) gebildet werden, wobei die Fördereinrichtung (23a) ausgebildet ist, mit der rohr- oder beutelförmigen Verpackungshülle (C) an zumindest einem der flachen Grenzbereiche (34c) zum Fördern der rohr- oder beutelförmigen Verpackungshülle (C) in den Bereitstellungsareal (32) in Eingriff gelangt.

12. Füllrohranordnung nach Anspruch 10 oder 11,
**dadurch gekennzeichnet, dass** das Paar Förderrollen (24) bewegbar und reversierbar in Richtung zueinander von einander gegenüberliegenden Seiten der rohr- oder beutelförmigen Verpackungshülle (C) angeordnet ist, um mit der rohr- oder beutelförmigen Verpackungshülle (C) zum Ausführen einer Förderbewegung und einer Bremskraft auf die rohr- oder beutelförmige Verpackungshülle (C) in Eingriff zu gelangen.

13. Füllrohranordnung nach einem der Ansprüche 10 bis 12,
**dadurch gekennzeichnet, dass** zumindest zwei Förderrollen (24) einen eingeschnürten Mittelabschnitt (28) und an beiden Seiten des eingeschnürten Mittelabschnitts (28) einen zylindrischen äußeren Abschnitt (26) enthält, wobei die Abmessungen und die Form des eingeschnürten Mittelabschnitts (28) in der Weise gestaltet sind, dass die rohr- oder beutelförmige Verpackungshülle (C) auf dem Füllrohr (12) umfasst wird.

14. Füllrohranordnung nach einem der Ansprüche 7 bis 13,
**dadurch gekennzeichnet, dass** die Fördereinrichtung (23a) ausgebildet ist, die tatsächliche Länge der zugeführten rohr- oder beutelförmigen Verpackungshülle (C) zu bestimmen.

15. Füllrohranordnung nach einem der Ansprüche 7 bis 14,
**dadurch gekennzeichnet, dass** die Vorratseinrichtung (10) ausgestaltet ist, ein Verfahren nach einem der Ansprüche 1 bis 6 auszuführen.

## Revendications

1. Procédé de production de produits (P) en forme de saucisse, comme des saucisses, sur une machine d'agrafage, en chargeant une matière à embosser susceptible de s'écouler par un orifice (14) d'embossage d'un tube (12) d'embossage dans un sens (15) de charge dans une enveloppe (C) de conditionnement tubulaire ou en forme de sachet fermée sur un côté d'extrémité faisant face au sens (15) de charge, le tube (12) d'embossage comprenant une zone (32) d'allocation dans le domaine de la sortie (14) d'embossage et une zone (33) d'alimentation en amont de la zone (32) d'allocation par rapport au sens (15) de charge, le procédé comprenant les stades dans lesquels:
- on prévoit un approvisionnement (A) d'enveloppe (C) de conditionnement tubulaire ou en forme de sachet sur la zone (33) d'alimentation du tube (12) d'embossage;
- on prévoit, sur la zone (32) d'allocation, un tronçon (B) de l'enveloppe (C) de conditionnement tubulaire ou en forme de sachet, correspondant à la longueur du produit (P) en forme de saucisse à produire plus au moins la longueur de la zone (32) d'allocation;
- on embosse une partie déterminée à l'avance de la matière à embosser dans l'enveloppe (C) de conditionnement tubulaire ou en forme de sachet, en tirant ainsi l'enveloppe (C) de conditionnement tubulaire ou en forme de sachet à emplir de la zone (32) d'allocation seulement;
- on regroupe et on ferme le tronçon qui vient d'être rempli de l'enveloppe (C) de conditionnement tubulaire ou en forme de sachet et
- on fait avancer une longueur déterminée à l'avance de l'enveloppe (C) de conditionnement tubulaire ou en forme de sachet, correspondant à la longueur du produit (P) en forme de saucisse à produire, dans un sens (15) de charge de la zone (33) d'alimentation à la zone (32) d'allocation du tube (12) d'embossage.

2. Procédé suivant la revendication 1,
**caractérisé en ce que**
le procédé comprend le stade dans lequel:
- on lit au moins un repère (36) d'impression sur l'enveloppe (C) de conditionnement tubulaire ou en forme de sachet pour identifier la longueur de l'enveloppe (C) de conditionnement tubulaire ou en forme de sachet à faire avancer à la zone (32) d'allocation.

3. Procédé suivant la revendication 1 ou 2,
**caractérisé en ce que**
le procédé comprend le stade dans lequel :
- on détermine la longueur de l'enveloppe (C) de conditionnement à faire avancer à la zone (32) d'allocation par un dispositif (23a) d'avance.

4. Procédé suivant l'une quelconque des revendications précédentes,
**caractérisé en ce que**
le procédé comprend le stade dans lequel :
- on fixe de manière réversible un tronçon de l'enveloppe (C) de conditionnement tubulaire ou en forme de sachet par rapport au tube (12) d'embossage par un dispositif (23b) de freinage entre la zone (32) d'allocation et la zone (33) d'alimentation du tube (12) d'embossage.

5. Procédé suivant l'une quelconque des revendications précédentes,
**caractérisé en ce que**
on fait débuter le remplissage de l'enveloppe (C) de conditionnement tubulaire ou en forme de sachet par la matière à embosser avant d'arrêter l'avance de l'enveloppe (C) de conditionnement tubulaire ou en forme de sachet à la zone (32) d'allocation.

6. Procédé suivant l'une quelconque des revendications précédentes,
**caractérisé en ce que**
on fait débuter l'avance de l'enveloppe (C) de conditionnement tubulaire ou en forme de sachet pour un produit (P) en forme de saucisse successif après la fin de l'opération d'embossage et avant de rassembler et de fermer le tronçon qui vient d'être rempli de l'enveloppe (C) de conditionnement tubulaire ou en forme de sachet.

7. Ensemble de tube d'embossage pour une machine d'agrafage afin de produire des produits (P) en forme de saucisse, comme des saucisses, dans lequel l'ensemble de tube d'embossage comprend un tube (12) d'embossage ayant une sortie (14) d'embossage, pour charger une matière à embosser susceptible de s'écouler dans un sens (15) de charge dans une enveloppe (C) de conditionnement tubulaire ou en forme de sachet fermée sur une extrémité latérale faisant face au sens (15) de charge, une zone (33) d'alimentation étant prévue sur le tube (12) d'embossage pour approvisionner la machine d'agrafage en l'enveloppe (C) de conditionnement tubulaire ou en forme de sachet,
**caractérisé en ce que** la machine d'agrafage comprend un dispositif de commande pour effectuer le procédé suivant au moins l'une des revendications 1 à 6,
l'ensemble (10) de tube d'embossage, comprenant un dispositif (10) d'alimentation ayant un dispositif (23a) d'avance pouvant être entraîné pour faire avancer un tronçon de l'enveloppe (C) de conditionnement tubulaire ou en forme de sachet à une zone (32) d'allocation prévue sur le tube (12) d'embossage entre le dispositif (23a) d'avance et la sortie (14) d'embossage et au moins un dispositif (23b) de freinage pour fixer de manière réversible un tronçon de l'enveloppe (C) de conditionnement tubulaire ou en forme de sachet par rapport au tube (12) d'embossage.

8. Ensemble de tube d'embossage suivant la revendication 7,
**caractérisé en ce que**
un dispositif (30) de lecture est mis sur le tube (12) d'embossage pour lire des repères (36) d'impression prévus sur l'enveloppe (C) de conditionnement tubulaire ou en forme de sachet en une position de lecture, afin d'identifier la longueur d'enveloppe (C) de conditionnement tubulaire ou en forme de sachet à faire avancer à la zone (32) d'allocation.

9. Ensemble de tube d'embossage suivant la revendication 7 ou 8,
**caractérisé en ce que**
le dispositif (23a) d'avance et le dispositif (23b) de freinage sont combinés en un dispositif (24) d'allocation pour faire avancer et pour fixer l'enveloppe (C) de conditionnement tubulaire ou en forme de sachet par rapport au sens (15) de charge.

10. Ensemble de tube d'embossage suivant l'une quelconque des revendications 7 à 9,
**caractérisé en ce que**
le dispositif (23a) d'avance comprend au moins une paire de rouleaux (24) d'avance, les rouleaux (24) d'avance étant disposés le long du côté longitudinal du tube (12) d'embossage.

11. Ensemble de tube d'embossage suivant la revendication 10,
**caractérisé en ce que**
le tube (12) d'embossage comprend une bague (20) d'expansion sur sa surface extérieure placée en amont du dispositif (23a) d'avance par rapport au sens (15) de charge pour épanouir l'enveloppe (C) de conditionnement tubulaire ou en forme de sachet radialement, la bague (20) d'expansion s'étendant sur au moins un plan parallèlement au sens (15) de charge plus que sur d'autres plans pour épanouir l'enveloppe (C) de conditionnement tubulaire ou en forme de sachet dans au moins deux directions opposées à un degré plus grand que dans les autres directions, en formant ainsi deux zones (34c) de bord plates opposées de l'enveloppe (C) de conditionnement tubulaire ou en forme de sachet, le dispositif (23a) d'avance étant configuré pour coopérer avec l'enveloppe (C) de conditionnement tubulaire ou en forme de sachet sur au moins l'une des zones (34c) de bord plates, afin de faire avancer l'enveloppe (C) de conditionnement tubulaire ou en forme de sachet à la zone (32) d'allocation.

12. Ensemble de tube d'embossage suivant la revendication 10 ou 11,
**caractérisé en ce que**
la paire de rouleaux (24) d'avance est agencée de manière mobile et réversible l'un vers l'autre à partir de deux côtés opposés de l'enveloppe (C) de conditionnement tubulaire ou en forme de sachet pour coopérer avec l'enveloppe (C) de conditionnement tubulaire ou en forme de sachet, afin d'effectuer un mouvement d'avance et d'appliquer une force de freinage sur l'enveloppe (C) de conditionnement tubulaire ou en forme de sachet.

13. Ensemble de tube d'embossage suivant l'une quelconque des revendications 10 à 12,
**caractérisé en ce que**
au moins deux rouleaux (24) d'avance comprennent un secteur (28) médian cambré, un secteur (26) extérieur cylindrique, la dimension et la forme du secteur (28) médian cambré étant conçues pour encercler l'enveloppe (C) de conditionnement tubulaire ou en forme de sachet sur le tube (12) d'embossage.

14. Ensemble de tube d'embossage suivant l'une quelconque des revendications 7 à 13,
**caractérisé en ce que**
le dispositif (23a) d'avance est configuré pour déterminer la longueur réelle de l'enveloppe (C) de conditionnement tubulaire ou en forme de sachet qui est avancée.

15. Ensemble de tube d'embossage suivant l'une quelconque des revendications 7 à 14,
**caractérisé en ce que**
le dispositif (10) d'alimentation est configuré afin d'être utilisé pour exécuter un procédé suivant l'une quelconque des revendications 1 à 6.
